# EUROPEAN PATENT SPECIFICATION

(11) **EP 2 468 596 B1**
(45) Date of publication and mention of the grant of the patent: **02.02.2022**
(21) Application number: 11193500.3
(22) Date of filing: 14.12.2011
(51) Int. Cl.: B60T 17/22, B60T 8/17, B64C 25/42

(54) **A method of monitoring aircraft brake performance and apparatus for performing such a method**
Verfahren zur Überwachung der Flugzeugbremsleistung und Vorrichtung zur Durchführung des Verfahrens
Procédé pour surveiller la performance de freinage d'un avion et appareil pour réaliser ledit procédé

(30) Priority: 21.12.2010 GB 201021545
(43) Date of publication of application: 27.06.2012
(73) Proprietor: Airbus Operations Limited, Bristol BS34 7PA (GB)
(72) Inventor: Wingate, John, Bristol, BS99 7AR (GB)
(74) Representative: EIP

(56) References cited:
- JP-A- 2008 120 105
- JP-A- 2010 064 665
- US-A- 4 822 113
- US-A1- 2004 036 351
- US-A1- 2004 138 791
- US-B1- 6 739 675

## Description

The present invention is concerned with a method of monitoring vehicle wheel brake performance, and an apparatus for performing such a method. More specifically, the present invention is concerned with a method of monitoring aircraft landing gear brake performance, and an apparatus for performing such a method.

A significant proportion of aircraft braking is performed by the wheel brakes (in addition to airbrakes and thrust reversers). Braking events during taxiing and landing require a significant amount of kinetic energy of the aircraft to be dissipated. This kinetic energy is converted into thermal and acoustic energy by friction within the brake system.

At present, the performance of aircraft brakes is monitored and reported by the aircraft flight crew and ground crew. For example, the flight crew are aware if certified stopping distances are not met. Abnormal brake temperature detected by onboard sensors may be indicative of brake performance problems. Asymmetric braking is also indicative of a performance problem with one of the braking systems. Regular visual inspections of the brake systems are also carried out by ground crew to look for visual indicators (e.g. uneven or excessive wear). US 6 739 675 B1, discloses a brake effort monitor software logic program for a transit vehicle such as a railcar. A performance comparison signal is generated by dividing an actual energy sum signal by a requested energy sum signal. US 4 822 113 A discloses a system for controlling the torque developed by a fluid actuated brake.

It will be noted that significant redundancy is built into aircraft braking systems such that a poorly performing brake is accounted for by other brakes on the aircraft. Such redundancy ensures that detrimental brake performance does not affect the ability of the aircraft to come to a full and complete stop. Nevertheless, proper monitoring of brake performance degradation before the above mentioned effects become noticeable would be beneficial so that inspection and service can be scheduled into the aircraft's flight plan. Expensive, inconvenient and unexpected delays due to servicing can thereby be avoided.

It is an object of the present invention to provide an aircraft wheel brake monitoring method and apparatus which mitigates the above mentioned problems.

According to a first aspect of the invention there is provided a method of monitoring the performance of an aircraft wheel brake according to claim 1.

Advantageously, the above method provides a metric which can be compared to an ideal, or performing brake system. If the brake performance indicator falls outside the expected, or ideal, range, then the brake can be scheduled for service at the next appropriate occasion.

Preferably the brake performance input variable is brake demand.

Preferably the brake performance input variable is brake servo pressure. Brake servo pressure is then converted to an estimated brake torque demand.

The estimated brake torque demand may be a percent (%) brake torque demand.

Preferably the method comprises the steps of:
providing a braked wheel arranged to be braked by the brake,
recording the speed of the braked wheel during the braking operation,
using the braked wheel speed to calculate the energy demand.

Preferably the step of calculating the energy demand comprises the steps of:
multiplying the estimated brake torque demand by the speed of the braked wheel to calculate power demand data,
integrating the power demand data over time to calculate the energy demand.

The use of the wheel speed in the calculation helps to eliminate events such as wheel slip or skid from affecting the calculation.

Preferably the brake performance output variable is brake torque.

Preferably brake torque is measured at the brake.

Preferably the method comprises the steps of:
providing a braked wheel arranged to be braked by the brake,
monitoring the speed of the braked wheel during the braking operation,
using the braked wheel speed to calculate the energy absorbed.

Preferably the method comprises the steps of:
multiplying the brake torque by the speed of the braked wheel to calculate power absorbed data,
integrating the power absorbed data over time to calculate the energy absorbed.

According to the invention, the brake performance criterion is at least three standard deviations of a normal distribution of brake energy differentials from a relationship between energy demand and energy absorbed for a healthy brake.

Preferably an alert is produced if impaired performance of the brake is detected.

According to a second aspect of the invention there is provided an aircraft wheel brake monitoring apparatus according to claim 13.

By using the brake speed in the energy demand calculation, erroneous results due to wheel lock / skidding can be avoided, which would otherwise cause a large difference in energy demand and actual energy absorbed.

An example method and apparatus, in accordance with the present invention, will now be described with reference to the following Figures:
FIGURE 1 is a simplified schematic view of an aircraft landing gear braking system;
FIGURE 2 is an example plot of brake pedal demand versus brake servo pressure;
FIGURE 3 is a plot of the brake torque over time during a braking operation;
FIGURE 4 is a plot of brake servo pressure over time during the braking operation of Figure 3;
FIGURE 5 is a plot of wheel speed over time during the braking operation of Figure 3;
FIGURE 6 is a flow chart of a method in accordance with the present invention;
FIGURE 7 is a plot of pseudo energy demand versus energy absorbed for a plurality of braking operations;
FIGURE 8 is a histogram of energy residuals for the plot of Figure 7; and
FIGURE 9 is a plot similar to that of Figure 7 with multiples of the standard deviation of the statistical model of Figure 8 plotted thereon.

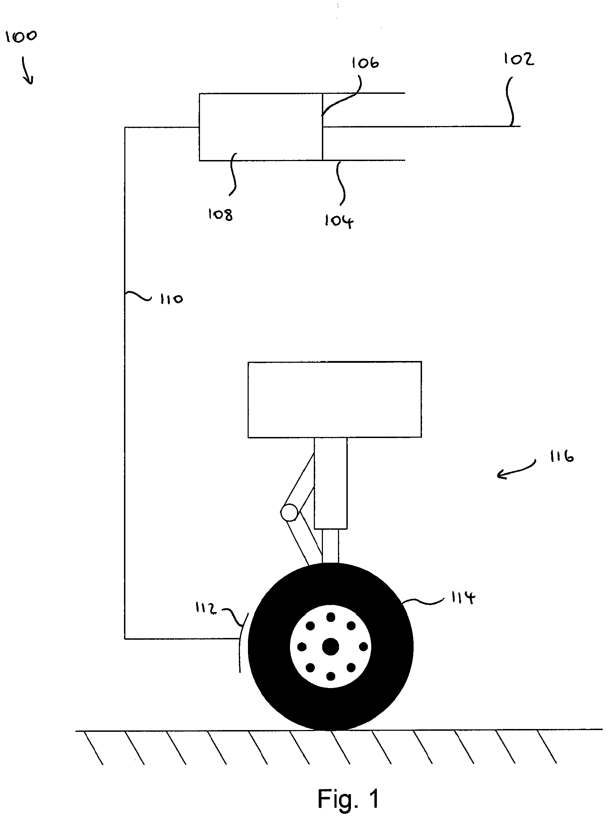

Turning to Figure 1 there is provided an aircraft braking system 100 comprising a mechanical input 102. This is, for example, a brake pedal operated by the pilot. The input 102 is connected to a hydraulic master cylinder 104 via a servomechanism (not shown) comprising a piston 106 arranged to pressurise a working chamber 108. The working chamber 108 is in fluid communication with a brake line 110 which in turn is connected to a slave cylinder of a brake caliper 112 which is arranged to slow a wheel 114 of a landing gear 116 in order to decelerate the aircraft.

The present invention is based on the ability to compare an energy demand (from the pilot) to the actual energy used by the brakes during a braking operation.

Because energy is not directly measurable, appropriate input and output variables need to be measured and used to estimate the energy demand and usage at the brake.

In terms of energy demand, this can be estimated ("pseudo" energy demand) using the input variable of torque demand applied by the pilot. In this embodiment, this torque demand is not directly measured but instead is estimated from the brake servo pressure in chamber 108.

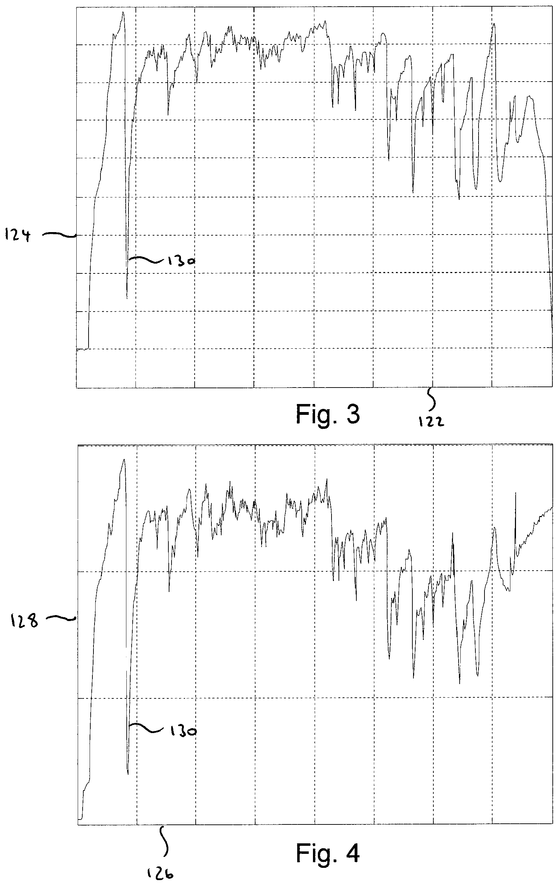

A pressure transducer in the chamber 108 measures brake servo pressure. A plot of servo pressure over time can be seen in Figure 4.

Referring to Figure 4, a variation in brake servo pressure over time can be seen with time plotted on the x-axis 126 and servo pressure on the y-axis 128. It will be noted, for example, that a skid event 130 can be observed in which servo pressure drops.

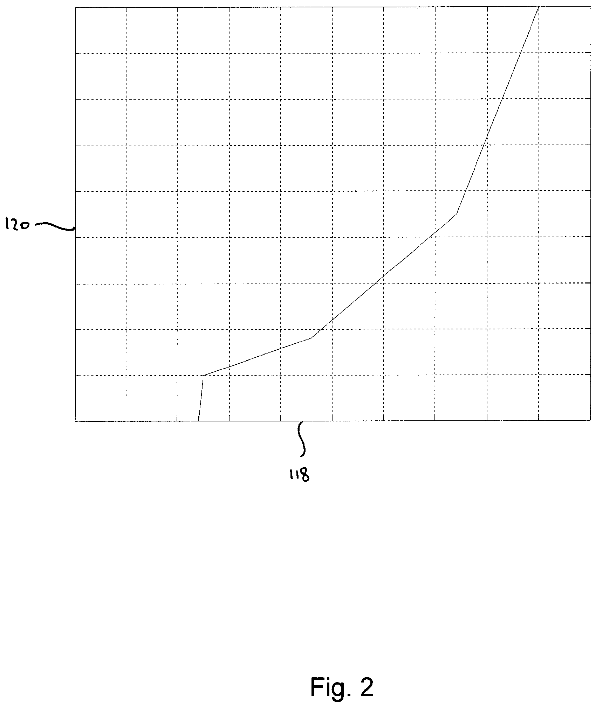

In order to convert the servo pressure to torque demand, a linear relationship is assumed. Turning to Figure 2 the x-axis 118 represents pilot brake pedal demand ranging from 0 to 100 percent. The y-axis 120 represents the servo pressure created in the working chamber 108 as a result.

As can be seen, the relationship is almost linear. Therefore, by normalising the pressure characteristic to have a minimum of 0 and maximum 100, an estimated "pseudo" torque demand characteristic in percent (%) can be derived.

For actual energy used at the brake, torque sensors are supplied on modern braking systems and, as such, the torque applied by a brake over a given braking event can be plotted, as shown in Figure 3. The x-axis 122 represents time and the y-axis 124 represents braking torque.

In order to convert the pseudo torque demand and the torque at the brake to a pseudo energy demand and energy absorbed, the wheel speed is required.

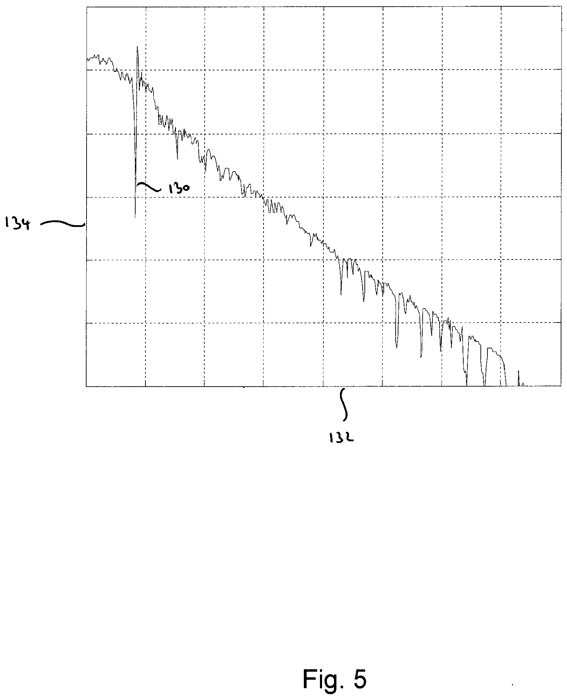

A typical landing gear comprises a speed sensor and, referring to Figure 5, a variation in wheel speed is shown over time with time, plotted on the x-axis 132, and wheel speed on the y-axis 134. It will be noted that the skid event 130 is also visible on this graph.

Multiplication of each of the torque characteristics (Figures 3 and 4) with the speed characteristic (Figure 5) results in a power versus time plot. In the case of the pseudo power demand, this will be in units of %.m/s (percent metres per second). In the case of the actual torque used this will be in units of N.m/s, or Watts.

Integration of these plots over the entire braking operation provides the pseudo energy demand (in %.m) and an actual energy dissipated at the brake (in Joules).

As will be described below, a given pseudo energy demand (in %.m) will provide a specific actual energy dissipated at the brake (in Joules). In other words for a healthy brake there is a relationship between these two metrics. Deviation from that relationship indicates impairment of brake performance (this is expanded upon below).

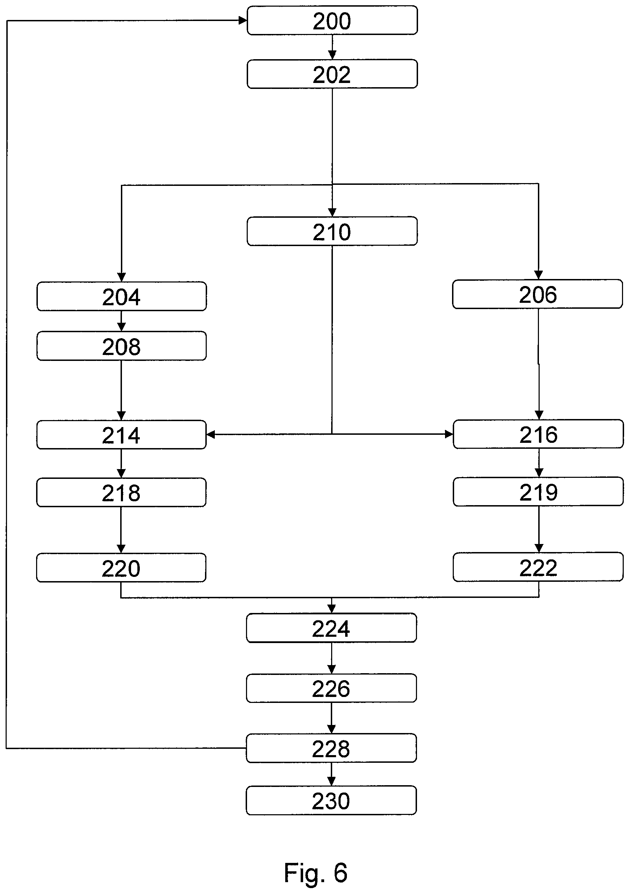

Referring to Figure 6, a typical automated method of determining the performance metric for the brake is shown. In step 200, the start of a braking event is detected by an appropriate sensor (this may be the servo pressure transducer and/or the brake torque sensor). In step 202, appropriate data files are created in the memory of an onboard computer. In steps 204, 206 and 210 brake servo pressure, torque and speed at the wheel respectively are recorded during the braking event. In step 208 brake servo pressure is converted to estimated torque demand as described above (i.e. by applying the linear pressure - torque demand model).

At step 214 the estimated torque demand 208 is multiplied by the wheel speed 210 to provide the power demand characteristic.

At step 216 the torque at the wheel 206 is multiplied by the wheel speed 210 to provide the actual power characteristic.

At steps 218 and 219 the power characteristics are integrated over the braking event to produce a total estimated energy demand 220 and total energy absorbed 222 respectively.

At step 224, these two values are compared in order to produce a performance metric in the form of an energy differential 226. The energy differential is the amount by which the actual energy absorbed differs from an expected energy absorbed given the pseudo energy demand. At step 228, the energy differential is compared to a statistical model (as will be described below) in order to determine brake performance. If brake performance is outside the expected range then an alert is produced at step 230. Otherwise, the system returns to a dormant state until the next braking operation.

The brake performance metric is the difference between an expected energy absorbed and the actual energy absorbed at the brake (i.e. an energy differential).

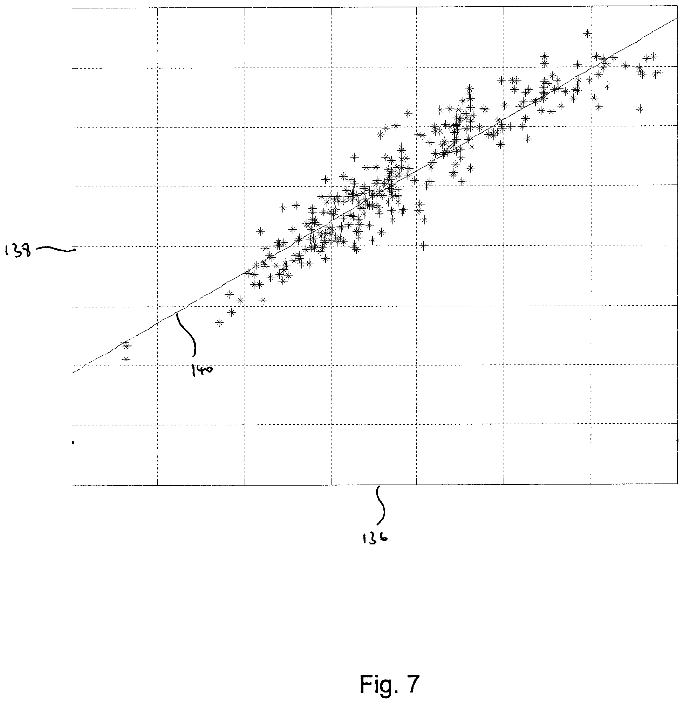

The applicant has discovered that the relationship between pseudo energy demand and the actual energy absorbed follows a linear relationship for a healthy brake over a series of braking operations. Referring to Figure 7, pseudo-energy demand is plotted on x-axis 136 versus actual energy absorbed on y-axis 138 for a multitude of braking events for healthy brakes. As can be seen, there is an approximate linear relationship 140 between these two figures. Any deviation from this ideal relationship is indicative of detrimental performance of the brake.

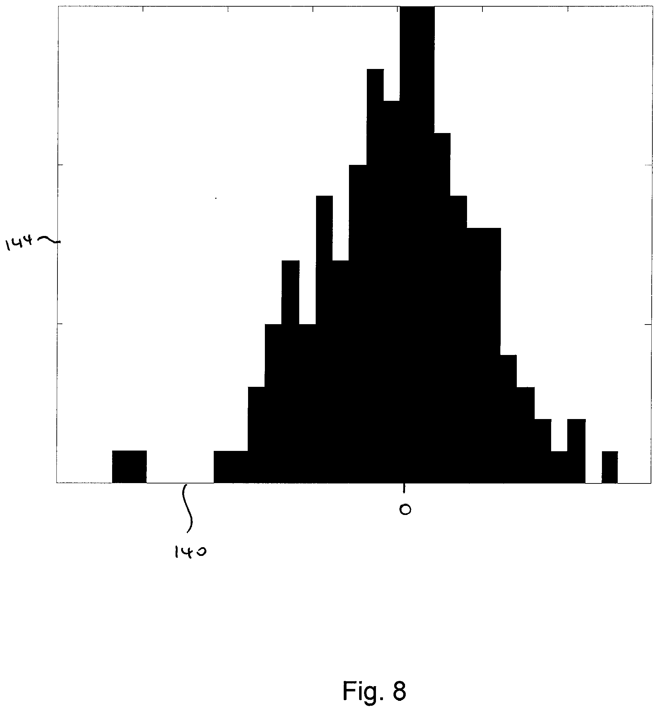

Turning to Figure 8, a histogram of brake energy differential (i.e. the difference between the actual energy absorbed and the ideal relationship 140) is plotted on the x-axis 142 with frequency on the y-axis 144. As can be seen, this follows a normal distribution having a mean of 0 and a standard deviation s.

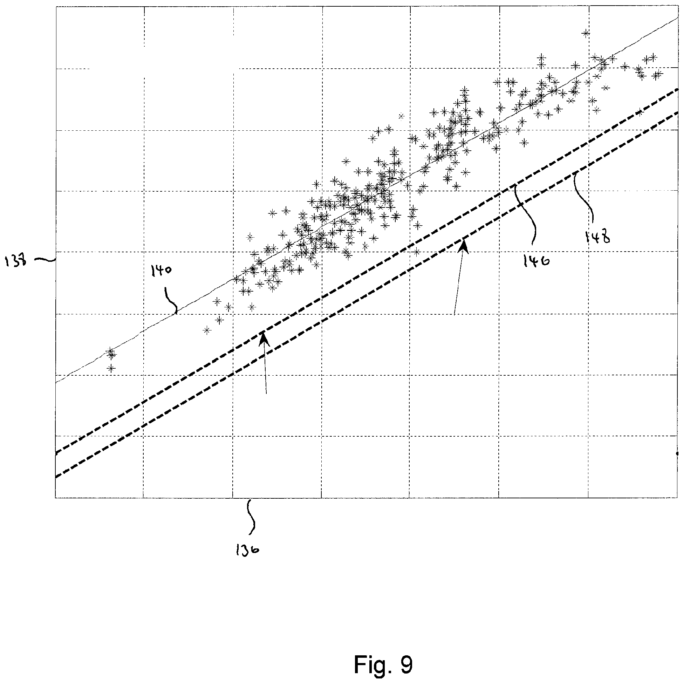

Turning to Figure 9, this plot is identical to that of Figure 8, but with a linear plot of three standard deviations 146 and four standard deviations 148 below the line 140. As can be seen, it is rare for the actual energy absorbed to drop three standard deviations below the expected value for a healthy brake (represented by line 140) and even rarer to drop four standard deviations below the line 140. The probability of the differential being over three standard deviations is 1 in 373, and over four standard deviations is 1 in 15787. As such, these values represent a suitable indicator of when a brake is malfunctioning.

The system can be modified to produce an alert should the brake pressure differential fall outside three standard deviations more than once in a given number of braking events, thus indicating a repetitive problem with the brake. This would also eliminate false alerts from statistical anomalies.

Variations fall within the scope of the present invention as defined by the appended claims. It will be noted that alternative methods of braking control (such as electronically actuated braking) are known in the art and this invention is equally applicable to those systems. Input to the system may also be provided via an automated system such as the aircraft auto-pilot. Instead of measuring brake servo pressure, the brake demand could be determined by actuation of the mechanical system by the pilot or autopilot as measured by a movement transducer.

## Claims

1. A method of monitoring the performance of an aircraft wheel brake (112) comprising the steps of:
providing an aircraft having a wheel brake (112),
measuring brake performance input variable data during a braking operation,
calculating an energy demand to be absorbed by the brake (112) over at least part of the braking operation using the brake performance input variable data,
measuring brake performance output variable data during the braking operation,
calculating an energy absorbed by the brake (112) over at least part of the braking operation using the brake performance output variable data,
determining a brake performance metric from the energy demand and the energy absorbed, wherein the brake performance metric is a brake energy differential, and wherein the brake energy differential is a difference between (i) the energy absorbed and (ii) an expected energy absorbed for a healthy brake (112), for the given energy demand, and
comparing the brake performance metric with a brake performance criterion to detect impaired performance of the brake (112),
wherein the brake performance criterion is at least three standard deviations of a normal distribution of brake energy differentials from a relationship between energy demand and energy absorbed for a healthy brake (112).

2. A method according to claim 1 in which the brake performance input variable is brake torque demand.

3. A method according to claim 1 in which the brake performance input variable is brake servo pressure.

4. A method according to claim 3 comprising the step of converting the brake servo pressure to an estimated brake torque demand.

5. A method according to claim 4 in which the estimated brake torque demand is a percentage (%) of brake torque demand.

6. A method according to claim 4 or 5 comprising the steps of:
providing a braked wheel (114) arranged to be braked by the aircraft wheel brake (112), recording the speed of the braked wheel (114) during the braking operation, using the braked wheel speed to calculate the energy demand.

7. A method according to claim 6 in which the step of calculating the energy demand comprises the steps of:
multiplying the estimated brake torque demand by the speed of the braked wheel (114) to calculate power demand data,
integrating the power demand data over time to calculate the energy demand.

8. A method according to any preceding claim in which the brake performance output variable is brake torque.

9. A method according to claim 8 in which brake torque is measured at the brake (112).

10. A method according to claim 8 or 9 comprising the steps of:
providing a braked wheel (114) arranged to be braked by the aircraft wheel brake (112), monitoring the speed of the braked wheel (114) during the braking operation,
using the braked wheel speed to calculate the energy absorbed.

11. A method according to claim 10 in which the step of calculating the energy absorbed comprises the steps of:
multiplying the brake torque by the speed of the braked wheel (114) to calculate power absorbed data,
integrating the power absorbed data over time to calculate the energy absorbed.

12. A method according to any preceding claim comprising the step of:
producing an alert if impaired performance of the brake is detected.

13. An aircraft wheel brake monitoring apparatus comprising:
a memory,
a first sensor arranged to measure brake performance input variable data during a braking operation and send the brake performance input variable data to the memory,
a second sensor arranged to measure brake performance output variable data during the braking operation and send the brake performance output variable data to the memory,
a processor arranged to access the memory and configured to;
(i) calculate energy demand to be absorbed by the brake (112) over at least part of a braking operation using the brake control input variable data,
(ii) calculate energy absorbed by the brake (112) over at least part of a braking operation using the brake performance output variable data,
(iii) calculate a brake performance metric from the energy demand and the energy absorbed, wherein the brake performance metric is a brake energy differential, and wherein the brake energy differential is a difference between (i) the energy absorbed and (ii) an expected energy absorbed for a healthy brake (112), for the given energy demand, and
(iv) compare the brake performance metric with a brake performance criterion to detect impaired performance of the brake (112),
wherein the brake performance criterion is at least three standard deviations of a normal distribution of brake energy differentials from a relationship between energy demand and energy absorbed for a healthy brake (112).

14. An aircraft wheel brake monitoring apparatus according to claim 13, wherein the processor is configured to (v) produce an alert if impaired performance of the brake (112) is detected.

## Patentansprüche

1. Verfahren zum Überwachen der Leistung einer Luftfahrzeugradbremse (112), das die folgenden Schritte umfasst:
Bereitstellen eines Luftfahrzeugs, das eine Radbremse (112) aufweist,
Messen von Bremsleistungseingangsgrößendaten während eines Bremsvorgangs,
Berechnen eines durch die Bremse (112) über zumindest einen Teil des Bremsvorgangs aufzunehmenden Energiebedarfs unter Verwendung der Bremsleistungseingangsgrößendaten,
Messen von Bremsleistungsausgangsgrößendaten während des Bremsvorgangs,
Berechnen einer durch die Bremse (112) über zumindest einen Teil des Bremsvorgangs aufgenommenen Energie unter Verwendung der Bremsleistungsausgangsgrößendaten,
Bestimmen einer Bremsleistungsmetrik aus dem Energiebedarf und der aufgenommenen Energie, wobei die Bremsleistungsmetrik eine Bremsenergiedifferenz ist, und wobei die Bremsenergiedifferenz eine Differenz zwischen (i) der aufgenommenen Energie und (ii) einer erwarteten aufgenommenen Energie für eine funktionsfähige Bremse (112) für den vorgegebenen Energiebedarf ist, und
Vergleichen der Bremsleistungsmetrik mit einem Bremsleistungskriterium, um eine beeinträchtigte Leistung der Bremse (112) zu detektieren,
wobei das Bremsleistungskriterium mindestens drei Standardabweichungen einer Normalverteilung von Bremsenergiedifferenzen aus einem Verhältnis zwischen Energiebedarf und aufgenommener Energie für eine funktionsfähige Bremse (112) ist.

2. Verfahren nach Anspruch 1, wobei die Bremsleistungseingangsgröße ein Bremsmomentbedarf ist.

3. Verfahren nach Anspruch 1, wobei die Bremsleistungseingangsgröße ein Bremsservodruck ist.

4. Verfahren nach Anspruch 3, umfassend den Schritt Umwandeln des Bremsservodrucks in einen geschätzten Bremsmomentbedarf.

5. Verfahren nach Anspruch 4, wobei der geschätzte Bremsmomentbedarf ein Prozentsatz (%) eines Bremsmomentbedarfs ist.

6. Verfahren nach Anspruch 4 oder 5, das die folgenden Schritte umfasst:
Bereitstellen eines gebremsten Rads (114), das dazu angeordnet ist, durch die Luftfahrzeugradbremse (112) gebremst zu werden,
Aufzeichnen der Drehzahl des gebremsten Rads (114) während des Bremsvorgangs,
Verwenden der gebremsten Raddrehzahl, um den Energiebedarf zu berechnen.

7. Verfahren nach Anspruch 6, wobei der Schritt Berechnen des Energiebedarfs die folgenden Schritte umfasst:
Multiplizieren des geschätzten Bremsmomentbedarfs mit der Drehzahl des gebremsten Rads (114), um Leistungsbedarfsdaten zu berechnen,
Integrieren der Leistungsbedarfsdaten über die Zeit, um den Energiebedarf zu berechnen.

8. Verfahren nach einem der vorhergehenden Ansprüche, wobei die Bremsleistungsausgangsgröße ein Bremsmoment ist.

9. Verfahren nach Anspruch 8, wobei das Bremsmoment an der Bremse (112) gemessen wird.

10. Verfahren nach Anspruch 8 oder 9, das die folgenden Schritte umfasst:
Bereitstellen eines gebremsten Rads (114), das dazu angeordnet ist, durch die Luftfahrzeugradbremse (112) gebremst zu werden,
Überwachen der Drehzahl des gebremsten Rads (114) während des Bremsvorgangs,
Verwenden der gebremsten Raddrehzahl, um die aufgenommene Energie zu berechnen.

11. Verfahren nach Anspruch 10, wobei der Schritt Berechnen der aufgenommenen Energie die folgenden Schritte umfasst:
Multiplizieren des Bremsmoments mit der Drehzahl des gebremsten Rads (114), um aufgenommene Leistungsdaten zu berechnen,
Integrieren der aufgenommenen Leistungsdaten über die Zeit, um die aufgenommene Energie zu berechnen.

12. Verfahren nach einem der vorhergehenden Ansprüche, das den folgenden Schritt umfasst:
Erzeugen einer Warnung, wenn eine beeinträchtigte Leistung der Bremse detektiert wird.

13. Einrichtung zum Überwachen einer Luftfahrzeugradbremse, die Folgendes umfasst:
einen Speicher,
einen ersten Sensor, der dazu angeordnet ist, Bremsleistungseingangsgrößendaten während eines Bremsvorgangs zu messen und die Bremsleistungseingangsgrößendaten an den Speicher zu senden,
einen zweiten Sensor, der dazu angeordnet ist, Bremsleistungsausgangsgrößendaten während des Bremsvorgangs zu messen und die Bremsleistungsausgangsgrößendaten an den Speicher zu senden,
einen Prozessor, der dazu angeordnet ist, auf den Speicher zuzugreifen, und zu Folgendem ausgelegt ist;
(i) Berechnen eines durch die Bremse (112) über zumindest einen Teil eines Bremsvorgangs aufzunehmenden Energiebedarfs unter Verwendung der Bremssteuerungseingangsgrößendaten,
(ii) Berechnen einer durch die Bremse (112) über zumindest einen Teil eines Bremsvorgangs aufgenommenen Energie unter Verwendung der Bremsleistungsausgangsgrößendaten,
(iii) Berechnen einer Bremsleistungsmetrik aus dem Energiebedarf und der aufgenommenen Energie, wobei die Bremsleistungsmetrik eine Bremsenergiedifferenz ist, und wobei die Bremsenergiedifferenz eine Differenz zwischen (i) der aufgenommenen Energie und (ii) einer erwarteten aufgenommenen Energie für eine funktionsfähige Bremse (112) für den vorgegebenen Energiebedarf ist, und
(iv) Vergleichen der Bremsleistungsmetrik mit einem Bremsleistungskriterium, um eine beeinträchtigte Leistung der Bremse (112) zu detektieren,
wobei das Bremsleistungskriterium mindestens drei Standardabweichungen einer Normalverteilung von Bremsenergiedifferenzen aus einem Verhältnis zwischen Energiebedarf und aufgenommener Energie für eine funktionsfähige Bremse (112) ist.

14. Einrichtung zum Überwachen einer Luftfahrzeugradbremse nach Anspruch 13, wobei der Prozessor ausgelegt ist zum (v) Erzeugen einer Warnung, wenn eine beeinträchtigte Leistung der Bremse (112) detektiert wird.

## Revendications

1. Procédé de surveillance des performances d'un frein de roue d'aéronef (112), comprenant les étapes de :
la fourniture d'un aéronef ayant un frein de roue (112),
la mesure de données de variable d'entrée de performances de frein durant une opération de freinage,
le calcul d'une demande en énergie devant être absorbée par le frein (112) durant au moins une partie de l'opération de freinage en utilisant les données de variable d'entrée de performances de frein,
la mesure de données de variable de sortie de performances de frein durant l'opération de freinage,
le calcul d'une énergie absorbée par le frein (112) durant au moins une partie de l'opération de freinage en utilisant les données de variable de sortie de performances de frein,
la détermination d'une métrique de performances de frein à partir de la demande en énergie et de l'énergie absorbée, dans lequel la métrique de performances de frein est un différentiel d'énergie de frein, et dans lequel le différentiel d'énergie de frein est une différence entre (i) l'énergie absorbée et (ii) une énergie absorbée escomptée pour un frein en bonne condition (112), pour la demande en énergie donnée, et
la comparaison de la métrique de performances de frein à un critère de performances de frein pour détecter des performances détériorées du frein (112),
dans lequel le critère de performances de frein est au moins trois écarts types d'une distribution normale de différentiels d'énergie de frein par rapport à une relation entre la demande en énergie et l'énergie absorbée pour un frein en bonne condition (112).

2. Procédé selon la revendication 1, dans lequel la variable d'entrée de performances de frein est une demande en couple de frein.

3. Procédé selon la revendication 1, dans lequel le variable d'entrée de performances de frein est une servo-pression de frein.

4. Procédé selon la revendication 3, comprenant l'étape de la conversion de la servo-pression de frein en une demande en couple de frein estimée.

5. Procédé selon la revendication 4, dans lequel la demande en couple de frein estimée est un pourcentage (%) de demande en couple de frein.

6. Procédé selon la revendication 4 ou 5, comprenant les étapes de :
la fourniture d'une roue freinée (114) agencée pour être freinée par le frein de roue d'aéronef (112),
l'enregistrement de la vitesse de la roue freinée (114) durant l'opération de freinage, en utilisant la vitesse de roue freinée pour calculer la demande en énergie.

7. Procédé selon la revendication 6, dans lequel l'étape du calcul de la demande en énergie comprend les étapes de :
la multiplication de la demande en couple de frein estimée par la vitesse de la roue freinée (114) pour calculer des données de demande en puissance,
l'intégration des données de demande en puissance au fil du temps pour calculer la demande en énergie.

8. Procédé selon une quelconque revendication précédente, dans lequel la variable de sortie de performances de frein est un couple de frein.

9. Procédé selon la revendication 8, dans lequel le couple de frein est mesuré au frein (112).

10. Procédé selon la revendication 8 ou 9, comprenant les étapes de :
la fourniture d'une roue freinée (114) agencée pour être freinée par le frein de roue d'aéronef (112),
la surveillance de la vitesse de la roue freinée (114) durant l'opération de freinage,
l'utilisation de la vitesse de roue freinée pour calculer l'énergie absorbée.

11. Procédé selon la revendication 10, dans lequel l'étape du calcul de l'énergie absorbée comprend les étapes de :
la multiplication du couple de frein par la vitesse de la roue freinée (114) pour calculer des données de puissance absorbée,
l'intégration des données de puissance absorbée au fil du temps pour calculer l'énergie absorbée.

12. Procédé selon une quelconque revendication précédente, comprenant l'étape de :
la production d'une alerte si des performances détériorées du frein sont détectées.

13. Appareil de surveillance de frein de roue d'aéronef, comprenant :
une mémoire,
un premier capteur agencé pour mesurer des données de variable d'entrée de performances de frein durant une opération de freinage et envoyer les données de variable d'entrée de performances de frein à la mémoire,
un second capteur agencé pour mesurer des données de variable de sortie de performances de frein durant l'opération de freinage et envoyer les données de variable de sortie de performances de frein à la mémoire,
un processeur agencé pour accéder à la mémoire et configuré pour :
(i) calculer une demande en énergie devant être absorbée par le frein (112) durant au moins une partie d'une opération de freinage en utilisant les données de variable d'entrée de commande de frein,
(ii) calculer une énergie absorbée par le frein (112) durant au moins une partie d'une opération de freinage en utilisant les données de variable de sortie de performances de frein,
(iii) calculer une métrique de performances de frein à partir de la demande en énergie et de l'énergie absorbée, dans lequel la métrique de performances de frein est un différentiel d'énergie de frein, et dans lequel le différentiel d'énergie de frein est une différence entre (i) l'énergie absorbée et (ii) une énergie absorbée escomptée pour un frein en bonne condition (112), pour la demande en énergie donnée, et
(iv) comparer le métrique de performances de frein à un critère de performances de frein pour détecter des performances détériorées du frein (112),
dans lequel le critère de performances de frein est au moins trois écarts types d'une distribution normale de différentiels d'énergie de frein par rapport à une relation entre la demande en énergie et l'énergie absorbée pour un frein en bonne condition (112).

14. Appareil de surveillance de frein de roue d'aéronef selon la revendication 13, dans lequel le processeur est configuré pour (v) produire une alerte si des performances détériorées du frein (112) sont détectées.
